# EUROPÄISCHE PATENTSCHRIFT

(11) **EP 4 142 973 B1**
(45) Veröffentlichungstag und Bekanntmachung des Hinweises auf die Patenterteilung: **03.04.2024**
(21) Anmeldenummer: 21709910.0
(22) Anmeldetag: 26.02.2021
(51) Int. Cl.: B22F 12/00, B22F 12/41, B22F 10/28, B33Y 10/00, B33Y 30/00, G21F 1/00, G21F 3/00

(54) **ADDITIVE MANUFACTURING SYSTEM FÜR PULVERFÖRMIGES AUSGANGSMATERIAL UND VERFAHREN ZUR HERSTELLUNG EINES BAUTEILS**
ADDITIVE MANUFACTURING SYSTEM FOR POWDERY STARTING MATERIAL AND METHOD FOR MANUFACTURING A COMPONENT
SYSTÈME DE FABRICATION ADDITIVE POUR MATÉRIAU DE DÉPART PULVÉRULENT ET PROCÉDÉ DE FABRICATION D'UN COMPOSANT

(30) Priorität: 27.04.2020 DE 102020111460
(43) Veröffentlichungstag der Anmeldung: 08.03.2023
(73) Patentinhaber: ALD Vacuum Technologies GmbH, 63457 Hanau (DE)
(72) Erfinder: SCHÄFER, Karsten, 36088 Hünfeld (DE); NIEBLING, Arno, 63589 Linsengericht (DE); OSMANLIC, Fuad, 63500 Seligenstadt (DE)
(74) Vertreter: Fuchs Patentanwälte Partnerschaft mbB
(86) Internationale Anmeldenummer: PCT/EP2021/054933
(87) Internationale Veröffentlichungsnummer: WO 2021/219274

(56) Entgegenhaltungen:
- EP-A1- 3 189 960
- WO-A1-2019/185642
- US-A1- 2018 311 759
- US-B1- 7 168 935

## Beschreibung

Die vorliegende Erfindung betrifft ein Additive Manufacturing System für pulverförmiges Ausgangsmaterial mit Elektronenstrahlkanonen als Bestrahlungseinheiten. Das System weist eine verbesserte Abschirmung von ionisierender Strahlung, insbesondere Röntgenstrahlung, auf.

### Stand der Technik

Vorrichtungen und Verfahren zur additiven Herstellung von Werkstücken, auch unter dem Begriff Additive Manufacturing (AM) bekannt, sind aus dem Stand der Technik bekannt. Man spricht auch von "generativen Herstellungsverfahren" oder "3D-Druck". Das Rohmaterial kann dabei in Pulverform oder flüssig sein. Zu den Pulverfahren zählen beispielsweise das Selective Laser Melting (SLM), das Selective Laser Sintering (SLS) oder das Electron Beam Melting (EBM). Das Rohmaterial besteht dabei aus Kunststoffen oder Metallen.

Bei den mit einem Rohmaterial in Pulverform arbeitenden Verfahren wird das Material in Form einer Schicht auf eine absenkbare Arbeitsfläche aufgetragen, um dort abschnittsweise geschmolzen oder gesintert zu werden. Anschließend wird die Arbeitsfläche um eine Schichtdicke abgesenkt. Auf die Schicht wird dann eine weitere Schicht aufgetragen und so verfahren wie mit der ersten Schicht. Dabei werden die zu schmelzenden bzw. zu sinternden Abschnitte so gewählt, dass schichtweise das dreidimensionale Werkstück aufgebaut wird.

Die Anlagen, die nach dem Electron Beam Melting (EBM) Verfahren arbeiten, benutzen als Strahlungsquelle im Gegensatz zu den Laserverfahren eine oder mehrere Elektronenstrahlkanonen. Da bei diesen beim Auftreffen des Elektronenstrahls auf die Pulveroberfläche neben der erwünschten Wärme auch Röntgenstrahlung entsteht, müssen diese Anlagen eine Abschirmung gegen ionisierende Strahlung besitzen. Zur Abschirmung von ionisierender Strahlung und insbesondere Röntgenstrahlung werden in der Regel die Anlagenwände aufwändig mit Verkleidungen vorwiegend aus Blei oder daneben auch Stahl versehen. Um die ionisierende Strahlung zuverlässig absorbieren zu können, ist eine entsprechende Mindestdicke dieser Verkleidungen erforderlich. Dies macht die Anlagen sehr schwer und dementsprechend wartungsunfreundlich. Davon abgesehen verursachen die dicken Verkleidungen auch erhebliche Kosten. Zudem ist Blei physiologisch bedenklich.

Beispielsweise beschreibt die US 2018/0311759 A1 eine Vorrichtung zum Bilden eines dreidimensionalen Artikels durch aufeinanderfolgendes Abscheiden einzelner Pulvermaterialschichten, die miteinander verschmolzen werden, um den Artikel zu bilden, wobei die Vorrichtung eine Elektronenstrahlquelle umfasst, die einen Elektronenstrahl zum Einschmelzen des Pulvermaterials aussendet, einen Bautank, eine hohle Konstruktion mit einer oberen Öffnung und einer unteren Öffnung, Mittel zum Bewegen der hohlen Konstruktion zwischen einer ersten Position und einer zweiten Position, eine Synchronisiereinheit zum Synchronisieren der Bewegung eines Pulververteilers zum Auftragen der einzelnen Pulvermaterialschichten auf dem Arbeitstisch mit der Bewegung der hohlen Konstruktion, so dass sich die hohle Metallkonstruktion an der ersten Position befindet, wenn die Pulverschicht geschmolzen und/oder erhitzt wird, und an der zweiten Position, wenn der Pulververteiler das Pulvermaterial zum Bilden der individuellen Pulverlagen verteilt. Die hohle Konstruktion dient dabei als Hitze- und Metallspritzer- oder Metalldampfschutzschild und soll eine Verunreinigung des Bauraums minimieren.

### Aufgabe

Ausgehend von diesen Problemen war es eine Aufgabe der vorliegenden Erfindung ein Additive Manufacturing System mit Elektronenstrahlkanonen bereitzustellen, mit dem die Nachteile der Vorrichtungen aus dem Stand der Technik überwunden werden. Insbesondere war es die Aufgabe dieser Erfindung, eine Vorrichtung, die mit kleiner und leichter dimensionierten Abschirmungen auskommt, ohne den Bauprozess zu beeinträchtigen, sowie ein Verfahren zur Herstellung von Bauteilen damit bereitzustellen.

### Beschreibung der Erfindung

Gelöst wird diese Aufgabe mit einem Additive Manufacturing System gemäß Anspruch 1 und einem Verfahren zur Herstellung eines Bauteils gemäß Anspruch 11. Bevorzugte Ausgestaltungsvarianten sind Gegenstand der abhängigen Ansprüche.

Ein erfindungsgemäßes Additive Manufacturing System für pulverförmiges Ausgangsmaterial beinhaltet
- eine Vakuumkammer beinhaltend
   + mindestens einen Baubereich mit einer Bauplattform,
   + mindestens ein seitlich des Baubereichs angeordnetes Pulverreservoir,
   + mindestens ein Pulverauftragselement, das zur Verteilung von pulverförmigem Ausgangsmaterial aus dem mindestens einen Pulverreservoir auf der mindestens einen Bauplattform horizontal beweglich zwischen dem mindestens einen Pulverreservoir und der mindestens einen Bauplattform angeordnet ist, wobei das Pulverauftragselement für jeden Pulververteilungsvorgang mindestens einmal den Baubereich durchquert, und
- mindestens eine dem mindestens einen Baubereich zugeordnete Elektronenstrahlkanone,
   wobei
- der mindestens eine Baubereich von einer Abschirmung gegen Röntgenstrahlung umgeben ist, die vier Wände umfasst, von denen zwei durch Wände der Vakuumkammer gebildet werden können;
   und zeichnet sich dadurch aus, dass
- die Wände der Abschirmung mindestens auf den beiden Seiten in Bewegungsrichtung des mindestens einen Pulverauftragselements aus einem Oberteil und einem Unterteil bestehen, wobei
   + das Oberteil starr mit der Vakuumkammer verbunden ist, aus 2-11 horizontal beabstandeten Metallblechen gebildet wird und eine lichte Höhe über der Bauplattform aufweist, die die horizontale Bewegung des Pulverauftragselements durch den Baubereich gestattet, und
   + das Unterteil mit einem vertikal beweglichen Rahmen verbunden ist und aus 2-11 horizontal beabstandeten Refraktärmetallblechen gebildet wird, die kämmend zu den Metallblechen des Oberteils angeordnet sind und röntgendicht an dem beweglichen Rahmen befestigt sind; und
- das Unterteil relativ zum Oberteil in der Vertikalen zwischen einer geschlossenen Stellung und einer geöffneten Stellung bewegbar ist, wobei die Refraktärmetallbleche des Unterteils
   + in der geschlossenen Stellung mit ihren Unterkanten mit einer Rillenstruktur auf der Oberfläche des Baubereichs unter Ausbildung einer Labyrinthstruktur in kämmendem Eingriff stehen und mit ihren Oberkanten unter Ausbildung einer Labyrinthstruktur in kämmendem Eingriff mit den Metallblechen des Oberteils angeordnet sind, und
   + in der geöffneten Stellung mindestens so weit zwischen den Metallblechen des Oberteils zu liegen kommen, dass sie die horizontale Bewegung des Pulverauftragselements durch den Baubereich gestatten.

Das erfindungsgemäße Additive Manufacturing System kann dabei mit mehreren Elektronenstrahlkanonen ausgerüstet sein, die einzelne Bereiche einer größeren Bauplattform abdecken, oder auch mit mehreren Bauplattformen ausgerüstet sein, denen jeweils eine oder mehrere Elektronenstrahlkanonen zugeordnet sind. Letzterer Aufbau bietet den Vorteil, dass dabei nur eine einzelne Vakuumkammer evakuiert werden muss.

Unter dem Baubereich wird im Rahmen dieser Anmeldung der Bereich in der Vakuumkammer des Additive Manufacturing Systems verstanden, in dem sich die Bauplattform befindet, auf der das pulverförmige Ausgangsmaterial mit dem Elektronenstrahl beschossen und so das Bauteil gebaut wird.

Bei dem Pulverauftragselement kann es sich beispielsweise um eine Rakel oder eine Auftragswalze handeln. Das aus dem Pulverreservoir bereit gestellte Pulver für die nächste Schicht des Bauteils wird von diesem auf der Oberfläche der Bauplattform bzw. den schon darauf befindlichen Schichten gleichmäßig verteilt. Dazu fährt das Pulverauftragselement einmal durch den ganzen Baubereich. Die Bewegung erfolgt zumindest bis zum Ende der Bauplattform, in der Regel jedoch bis zu einer Endposition ganz an der gegenüberliegenden Wand, da dort üblicherweise ein Auffangbehälter für überschüssiges Pulver oder ein weiteres Pulverreservoir angebracht ist. Von daher ist es nicht möglich, irgendwelche Einbauten im Bewegungsbereich des Pulverauftragselements, insbesondere oberhalb der Bauplattform, anzubringen. Dort ist jedoch der Ort der Entstehung der Röntgenstrahlung, die beim Auftreffen des Elektronenstrahls auf der Pulveroberfläche entsteht.

Bei dem erfindungsgemäßen Additive Manufacturing System wird dieses Problem dadurch gelöst, dass eine synchron zur Bewegung des Pulverauftragselements anhebbare Abschirmung gegen ionisierende Strahlung unmittelbar um den Baubereich herum eingesetzt wird. Somit ist es nicht erforderlich, die gesamten Außenwände der Anlage mit einer Abschirmung zu versehen, sondern es reichen wesentlich kleinere Abschirmungsflächen, da diese näher am Entstehungsort der Strahlung angeordnet werden. Auf diese Weise kann allein durch die Flächenreduktion bereits erheblich an Gewicht eingespart werden.

Allerdings besteht dabei dann noch das Problem, dass beträchtliche Massen bewegt werden müssten, wenn einfach die Abschirmungsflächen der Außenwände in gleicher Weise nur verkleinert gestaltet wären. Neben der mechanischen Beanspruchung, die dann eine entsprechend stabile Mechanik erfordern würde, ergäbe sich auch eine Verlangsamung des Bauprozesses, da die Bewegung der schweren Massen nicht so rasch erfolgen kann wie üblicherweise die Bewegungszeit des Pulverauftragselements.

Um dieses Problem zu lösen, wird die erfindungsgemäße Abschirmung gegen ionisierende Strahlung nicht aus einer massiven Platte hergestellt, die komplett bewegt werden muss und dafür dann auch noch einen vakuumdichten Durchlass in der Decke der Vakuumkammer benötigen würde. Stattdessen wird die Abschirmung zweigeteilt mit einem fest an der Decke der Vakuumkammer angebrachten Oberteil und einem beweglichen Unterteil ausgelegt. Dadurch braucht nur der Teil bewegt zu werden, der sich im Bewegungsbereich des Pulverauftragselements befindet. Zudem wird das massive Blech durch eine Anzahl von dünnen Blechen ersetzt, die so weit voneinander beabstandet sind, dass die Bleche von Oberteil und Unterteil kämmend ineinander beweglich sind. Diese kämmende Anordnung, die eine Labyrinthstruktur bildet, sorgt dafür, dass kein direkter Strahlweg existiert, sondern die Strahlung an den ineinandergreifenden Blechen mehrfach reflektiert und dadurch gebremst wird.

Ferner wird das Blech des beweglichen Unterteils aus einem Refraktärmetall hergestellt. Wenn in dieser Anmeldung von "Refraktärmetallblechen" gesprochen wird, sind darunter Bleche aus Mischungen oder Legierungen zu verstehen, die zu mehr als 50 Gew.-%, beispielsweise mehr als 60 Gew.-%, mehr als 70 Gew.-%, mehr als 80 Gew.-%, mehr als 90 Gew.-%, mehr als 95 Gew.-%, insbesondere mehr als 99 Gew.-%, aus Refraktärmetallen bestehen. Unter Refraktärmetallen sind wiederum im Rahmen dieser Anmeldung die hochschmelzenden Metalle Titan, Zirconium, Hafnium, Vanadium, Niob, Tantal, Chrom, Molybdän und Wolfram zu verstehen. Diese zeichnen sich neben dem hohen Schmelzpunkt überwiegend auch durch eine hohe Dichte und vor allem einen hohen spezifischen Absorptionskoeffizienten für ionisierende Strahlung aus. Somit können mit dünneren Blechen vergleichbare Abschirmleistungen zu den herkömmlichen dicken Blei- oder Stahlauflagen auf den Außenwänden erzielt werden. Ganz wesentlich ist hierbei auch der Vorteil der höheren Temperaturbeständigkeit der Refraktärmetalle gerade im Vergleich zum Blei, wodurch die Abschirmung näher an den Strahlungsort rücken kann und daher weniger Fläche braucht. Außerdem besitzt Blei eine unzureichende mechanische Stabilität, was eine Befestigung in Blechform an einem beweglichen Rahmen schon ohne erhöhte Temperaturen allein aus mechanischen Gründen ausschließt. Stahl bietet hier zwar bessere Stabilität, müsste aber auch dicker und damit schwerer ausgeführt werden, da dessen Absorptionskoeffizient geringer ist.

Vorzugsweise bestehen die Refraktärmetallbleche des Unterteils aus Wolfram, Molybdän, Rhenium, Tantal und/oder Mischungen oder Legierungen derselben. Besonders bevorzugt sind Wolfram, Molybdän, Tantal und/oder Mischungen oder Legierungen derselben. Legierungen und Mischungen können vorzugsweise mit Kupfer erfolgen.

Der Oberteil der Abschirmung, der nicht bewegt zu werden braucht, braucht nicht notwendigerweise aus Refraktärmetallen zu bestehen, sondern kann aus Kostengründen auch aus anderen Metallen bestehen. Wenn die Vakuumkammer jedoch sehr niedrig gehalten ist oder aufgrund des verarbeiteten Metallpulvers sehr hohe Temperaturen erzeugt werden müssen, kann es dennoch wünschenswert sein, auch die Bleche des Oberteils aus Refraktärmetallen zu fertigen. In diesem Fall können die gleichen Refraktärmetalle wie beim Unterteil zum Einsatz kommen. In Ausgestaltungsvarianten bestehen die Metallbleche des Oberteils aus Edelstahl, Kupfer, Refraktärmetallen und/oder Mischungen oder Legierungen derselben.

Es hat sich als vorteilhaft erwiesen, die einzelnen Bleche des Oberteils von außen nach innen mit abnehmender Länge zu gestalten. Die Unterkanten werden dabei gleichmäßig ausgerichtet, sodass die Oberkanten stufenartig versetzt sind. Dies erleichtert die Befestigung der Bleche an der Vakuumkammerdecke.

Die Anzahl der Bleche für den Oberteil und den Unterteil sind in Abhängigkeit der Leistung der Elektronenstrahlkanonen und der damit erzeugten ionisierenden Strahlung und dem verwendeten Metall festzulegen. Je nach Absorptionsfähigkeit des gewählten Metalls haben sich hier 2-11 Bleche als optimal erwiesen. Die Anzahl der Bleche sollte aus Sicherheitsgründen vorzugsweise so gewählt werden, dass immer ein Blech mehr verbaut wird als zur Abschirmung notwendig ist.

Die Abschirmung kann aus Kostengründen vorzugsweise aus einzelnen Refraktärmetallblech-Teilen hergestellt werden, die in Standardgrößen kommerziell erhältlich sind. Dabei werden vorteilhafterweise in jeder Lage an Refraktärmetallblechen mindestens zwei Stöße vorgesehen. An den Stößen innerhalb des Ober- und/oder Unterteils überlappen die Bleche dabei nicht, um ein Verkanten durch einen Verzug durch thermische Ausdehnung zu vermeiden. Die einzelnen Bleche können an den Stößen einen Spalt von bis zu 50 mm, bis zu 40 mm, bis zu 30 mm oder bis zu 20 mm aufweisen. Bevorzugt beträgt der Spalt 5 mm bis 25 mm, höchst bevorzugt 10 mm bis 20 mm. Die Stöße zweier aufeinanderfolgender Lagen an Refraktärmetallblechen innerhalb des Ober- und/oder Unterteils werden jeweils nicht fluchtend angeordnet, um einen freien Strahlengang zu vermeiden.

Vorzugsweise weisen die Refraktärmetallbleche des Unterteils jeweils eine Dicke von 0,1 bis 20 mm auf. Die Dicke der Bleche kann 0,1-20 mm, 0,5-15 mm, 1-10 mm, 2-8 mm oder 3-6 mm betragen. Die Dicke kann insbesondere höchstens 20 mm, höchstens 15 mm, höchstens 10 mm, höchstens 8 mm oder höchstens 6 mm betragen. Sie kann insbesondere mindestens 0,1 mm, mindestens 0,5 mm, mindestens 1 mm, mindestens 2 mm oder mindestens 3 mm betragen.

Als zusätzlichen Hitzeschutz kann das Unterteil ergänzend zu den Refraktärmetallblechen als innerste Lagen noch ein oder zwei Edelstahlblechlagen aufweisen. Diese können als Doppellage dann auch in geringerem Abstand zueinander angeordnet sein als die Refraktärmetallbleche. In erster Linie tragen die Edelstahlbleche zum Hitzeschutz bei, daneben aber auch noch in geringerem Maße zum Strahlenschutz. Durch diese Maßnahme werden die teureren Refraktärmetallbleche vor Hitze geschützt und halten so länger. Die günstigeren Edelstahlbleche können hingegen öfter ausgetauscht werden.

Vorzugsweise weisen die Metallbleche des Oberteils jeweils eine Dicke von 1 bis 100 mm auf. Die Dicke der Metallbleche kann 1-100 mm, 2-75 mm, 3-50 mm, 4-25 mm oder 5-15 mm betragen. Die Dicke kann insbesondere höchstens 100 mm, höchstens 75 mm, höchstens 50 mm, höchstens 25 mm oder höchstens 15 mm betragen. Sie kann insbesondere mindestens 1 mm, mindestens 2 mm, mindestens 3 mm, mindestens 4 mm oder mindestens 5 mm betragen. Die Dicke der Metallbleche des Oberteils ist vorzugsweise passend zu den Refraktärmetallblechen des Unterteils ausgelegt, sodass Oberteil und Unterteil ungefähr die gleiche Menge an Strahlung absorbieren. Die Metallbleche im Oberteil müssen nicht zwangsläufig eine einheitliche Dicke aufweisen. Sie können beispielsweise auch an den Außenseiten des Blechstapels dicker ausgelegt werden als im Inneren.

Höchst bevorzugt weisen die Refraktärmetallbleche des Unterteils und die Metallbleche des Oberteils bei kämmendem Eingriff jeweils einen Abstand von 1 mm bis 50 mm zueinander auf. Somit beträgt der Abstand der Refraktärmetallbleche beispielsweise 1 mm + Dicke der Metallbleche im Oberteil + 1 mm. Jedenfalls sollte der Abstand der Bleche zueinander sehr viel kleiner sein als die Höhe der Bleche, um sicher eine Strahlenfalle darzustellen. Der Abstand zwischen den Blechen sollte insbesondere maximal halb so groß sein wie die Strecke, mit der Oberteil und Unterteil im geschlossenen Zustand im kämmenden Eingriff stehen. Auf diese Weise können im erzeugten Strahlenlabyrinth die Mehrfachreflektionen maximiert werden.

Auf der Oberfläche des Baubereichs sind entsprechende Nuten eingelassen, in die die unteren Kanten der Bleche des Unterteils der Abschirmung in gleicher Weise eintauchen, wenn die Abschirmung in der geschlossenen Stellung ist, wie deren oberen Kanten in die unteren Kanten der Bleche des Oberteils. Somit wird auch an der Unterseite des Unterteils der Abschirmung ein Labyrinth erzeugt, was den Austritt von Strahlung verhindert.

In einer Ausgestaltungsvariante weisen die Refraktärmetallbleche des Unterteils eine Dichte von mehr als 10 g/cm³ (bei 20 °C) auf.

Die Abschirmung gegen ionisierende Strahlung kann in zweierlei Art aufgebaut sein. Sie umfasst in jedem Fall vier Wände, die den Baubereich umgeben und so abschirmen. Zwei dieser Wände können von den Außenwänden der Vakuumkammer gebildet werden, die dann in üblicher Weise mit einem abschirmenden Material versehen sind. Bei diesem Material kann es sich auch um die gängigen Materialien, wie Blei und Stahl, handeln, vorzugsweise wird jedoch kein Blei verwendet, sondern Refraktärmetalle oder Stahl eingesetzt. Diese beiden Wände sind in diesem Fall die nicht in Bewegungsrichtung des Pulverauftragselements liegenden Wände der Abschirmung. Die in Bewegungsrichtung des Pulverauftragselements liegenden Wände sind dann in der zweiteiligen Form mit Ober- und Unterteil ausgestaltet, damit die Abschirmung angehoben werden kann, um das Pulverauftragselement passieren zu lassen.

Bevorzugter ist jedoch der Einsatz von vier eigenen Wänden für die Abschirmung. Dadurch wird allseitig der geringste Abstand zum Strahlungsort hergestellt, sodass die geringste Fläche und Masse an Abschirmmaterialien aufgewandt werden muss.

Höchst bevorzugt bestehen alle vier Wände der Abschirmung aus einem Oberteil und Unterteil. Dies ist besonders vorteilhaft, weil bei zwei feststehenden Wänden nicht jede Art von Pulverauftragselementen bzw. deren Antriebe möglich ist. Werden diese beispielsweise, wie im Fall einer Rakel, seitlich geführt und/oder angetrieben, müssen alle vier Wände angehoben werden, um den Durchgang der Rakel über den Baubereich zu ermöglichen. Es besteht damit eine größere Designfreiheit beim Pulverauftragselement.

In Ausgestaltungsvarianten umfasst die röntgendichte Befestigung der Refraktärmetallbleche des Unterteils an dem beweglichen Rahmen eine Abstandsbolzenbefestigung, die zweierlei Durchmesser aufweist. Der erste Durchmesser ist passend zur Bohrung in den Refraktärmetallblechen dimensioniert. Der zweite Durchmesser, den die Abstandsbolzen außerhalb der Bohrung aufweisen, ist größer und zwar so, dass die Strahlung auf dem Weg durch die Bohrung vom Abstandsbolzen genauso abgeschirmt wird, wie durch das Refraktärmetallblech im nicht durchbohrten Bereich.

In bevorzugten Ausgestaltungsvarianten ist das Pulverauftragselement eine Rakel oder eine Rolle.

Das erfindungsgemäße Verfahren zur Herstellung eines Bauteils mit einem Additive Manufacturing System beinhaltet die Schritte
a) Bereitstellen eines erfindungsgemäßen Additive Manufacturing Systems,
b) Bereitstellen von pulverförmigem Ausgangsmaterial in dem mindestens einen Pulverreservoir und Evakuieren der Vakuumkammer,
c) Bewegen des Unterteils der Abschirmung in die geöffnete Stellung,
d) Verteilen von pulverförmigem Ausgangsmaterial aus dem mindestens einen Pulverreservoir auf der mindestens einen Bauplattform durch horizontales Bewegen des Pulverauftragselements zwischen dem mindestens einen Pulverreservoir und der mindestens einen Bauplattform, unter mindestens einmaligem vollständigen Durchqueren des Baubereichs,
e) Bewegen des Unterteils der Abschirmung in die geschlossene Stellung,
f) Erzeugen einer Schicht des Bauteils durch Bestrahlen des pulverförmigen Ausgangsmaterials mit der mindestens einen Elektronenstrahlkanone,
g) Wiederholen der Schritte c) bis f) bis das Bauteil fertiggestellt ist.

Je nach Ausgestaltung des Pulverauftragselements und des Auftragsvorgangs kann das Auftragen der Pulverschicht in einer einfachen einmaligen Bewegung erfolgen oder aber in einer Hin- und Herbewegung. In letzteren Fall bleibt die Abschirmung so lange geöffnet, bis das Pulverauftragselement nach der zweiten Bewegung wieder in seine Ausgangslage zurückgekehrt ist. Erst dann wird die Abschirmung herunter gelassen und mit der Bestrahlung begonnen.

Die Bestrahlung erfolgt ausschließlich bei geschlossener Abschirmung. Solange die Abschirmung geöffnet ist, sind die Elektronenkanonen deaktiviert.

### Kurzbeschreibung der Figuren

**Figur 1** ist eine perspektivische Schnittansicht eines erfindungsgemäßen Additive Manufacturing Systems in geschlossenem Zustand in der Ausgangsstellung.
**Figur 2** ist eine perspektivische Schnittansicht des von der Abschirmung umgebenen Baubereichs.
**Figur 3** ist eine perspektivische Schnittansicht des Systems von Figur 1 in offenem Zustand mit dem Pulverauftragselement vor Eintritt in den Baubereich.
**Figur 4** ist eine perspektivische Schnittansicht des Systems von Figur 1 in offenem Zustand mit dem Pulverauftragselement im Baubereich.
**Figur 5** ist eine perspektivische Schnittansicht des Systems von Figur 1 in geschlossenem Zustand nachdem das Pulverauftragselement den Baubereich wieder verlassen hat.

### Figurenbeschreibung

Die Figuren zeigen lediglich eine bevorzugte Ausgestaltungsvariante als Beispiel für die Erfindung. Sie sind daher nicht als einschränkend zu verstehen.

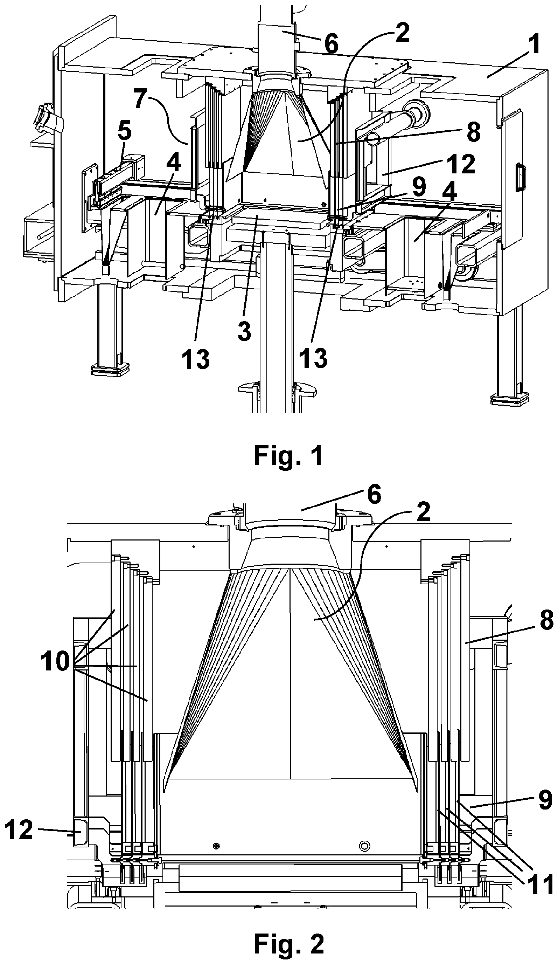

**Figur 1** zeigt eine perspektivische Schnittansicht eines erfindungsgemäßen Additive Manufacturing Systems. In der Vakuumkammer (1) ist ein Baubereich (2) angeordnet, in dem sich eine einzelne Bauplattform (3) befindet. Diese ist in der oberen Ausgangsstellung zu Baubeginn gezeigt. Links und rechts des Baubereichs (2) befindet sich je ein Pulverreservoir (4) mit einem sich daran anschließenden Schlitz für die Aufnahme von überschüssigem Pulver. Das Pulverauftragselement (5), in diesem Beispiel eine Rakel, die an einer beweglichen Traverse aufgehängt ist, transportiert jeweils eine Menge an Pulver aus dem Pulverreservoir (4) auf die Bauplattform (3) in dem Baubereich (2), die etwas größer ist als für eine Schicht des Bauteils benötigt wird, damit sichergestellt werden kann, dass die gesamte Fläche der Bauplattform (3) gleichmäßig beschichtet wird. Überschüssiges Pulver wird über das gegenüberliegende Pulverreservoir (4) hinweg in den Schlitz transportiert und gelangt von dort in einen Auffangbehälter. In der Figur 1 befindet sich das Pulverauftragselement (5) in der linken Ausgangsstellung.

Oberhalb des Baubereichs (2) ist in der Decke der Vakuumkammer (1) eine Elektronenstrahlkanone (6) eingelassen. Der gesamte Baubereich (2) ist auf allen vier Seiten von einer Abschirmung (7) umgeben, die aus einem Oberteil (8) und einem Unterteil (9) besteht. Die Abschirmung (7) ist in geschlossenem Zustand, da das Pulverauftragselement (5) sich noch in der Ausgangsstellung befindet. **Figur 2** zeigt nochmals eine vergrößerte Ansicht des von der Abschirmung (7) umgebenen Baubereichs (2). In dem hier gezeigten Beispiel besteht das Oberteil (8) aus vier Metallblechen (10) aus Edelstahl mit einer Dicke von außen 30 mm und innen 20 mm im Abstand von 13 mm. Das Unterteil (9) besteht aus drei Refraktärmetallblechen (11) aus reinem Wolfram mit einer Dicke von 3 mm im Abstand von 30 mm. Die Dichte der Refraktärmetallbleche (11) beträgt mithin 19,25 g/cm³. Die Refraktärmetallbleche (11) des Unterteils (9) sind kämmend in den Metallblechen (10) des Oberteils (8) angeordnet und überlappen 45 mm mit diesen.

Die Metallbleche (10) des Oberteils (8) sind von außen in Richtung des Baubereichs (2) jeweils etwas kürzer dimensioniert. Dadurch lassen sie sich mit den Bolzen leichter an der gestuften Halterung an der Decke der Vakuumkammer (1) befestigen. Die Refraktärmetallbleche (11) sind an dem beweglichen Rahmen (12) befestigt und können über diesen angehoben werden. Mit ihren Unterkanten tauchen sie in der hier gezeigten geschlossenen Stellung in eine Rillenstruktur (13) ein, die den Randbereich des Baubereichs (2) bildet. Die Rillenstruktur (13) ist gleichartig zur Struktur des Oberteils dimensioniert, d. h. im vorliegenden Beispiel sind Rillen von 13 mm Breite im Abstand von 20 mm um die Bauplattform (3) herum in die Oberfläche der Vakuumkammer (1) eingefräst, da die Rillen den Abständen der Bleche und die dazwischen verbleibenden Stege der Dicke der Bleche entsprechen.

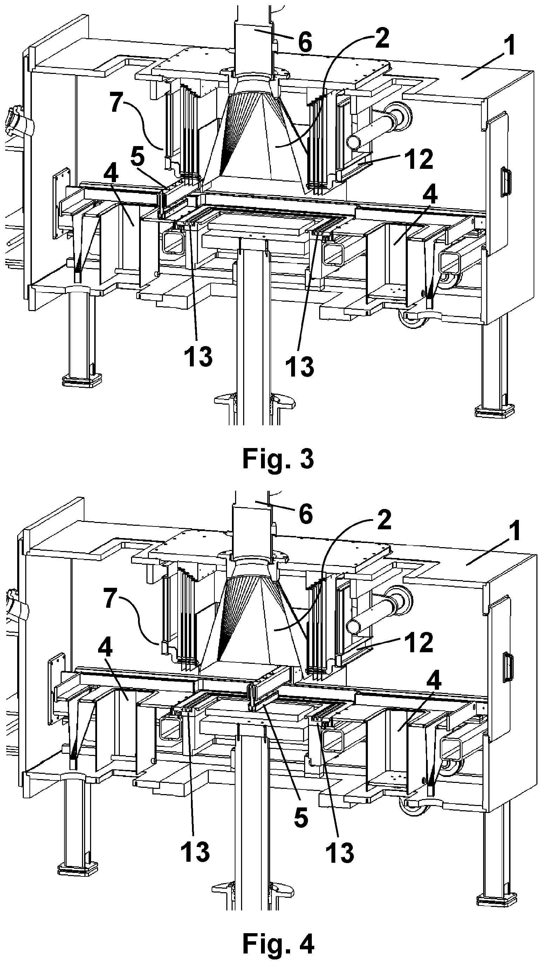

Zur Herstellung eines Bauteils werden die Pulverreservoirs (4) mit einem pulverförmigen Ausgangsmaterial befüllt, beispielsweise mit einem Titanpulver, die Anlage in die in **Figur 1** dargestellte Startposition versetzt und die Vakuumkammer (1) evakuiert. Für die Erzeugung der ersten Lage des Bauteils wird dann aus dem Pulverreservoir (4) mit dem Pulverauftragselement (5) Titanpulver in Richtung des Baubereichs (2) befördert. Entweder unmittelbar vor dem sich das das Pulverauftragselement (5) in Bewegung setzt oder wenn es die geschlossene Abschirmung (7) fast erreicht hat, wird deren Unterteil (9) mittels des beweglichen Rahmens (12) angehoben und in den Oberteil (8) eingeschoben, sodass der Bewegungsbereich des Pulverauftragselements (5) freigegeben wird. Die Elektronenstrahlkanone (6) ist während dieser Zeit deaktiviert. Diese Situation ist in **Figur 3** dargestellt. Dort ist bei geöffneter Abschirmung (7) nun auch gut die Rillenstruktur (13) zu erkennen.

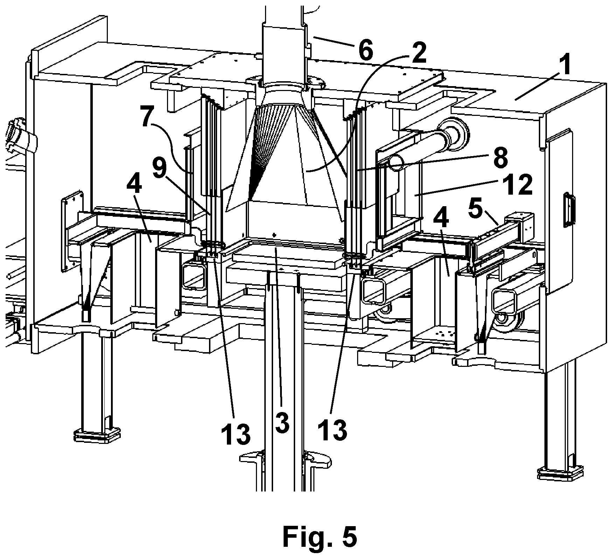

**Figur 4** zeigt das Pulverauftragselement (5) beim Durchqueren des Baubereichs (2) und Verteilen des Titanpulvers auf der Bauplattform (3). **Figur 5** zeigt das Pulverauftragselement (5) unmittelbar nach Durchqueren des Baubereichs (2). Sobald das Pulverauftragselement (5) den Baubereich (2) wieder verlassen hat, wird das Unterteil (9) wieder in die geschlossene Stellung heruntergelassen. Die Unterkanten der Refraktärmetallbleche (11) tauchen wieder in die Rillenstruktur (13) ein. Das Pulverauftragselement (5) fährt anschließend weiter in die Endposition hinter dem rechten Pulverreservoir (4) und entsorgt dabei überschüssiges Titanpulver in den Auffangschlitz. Sobald die Abschirmung (7) wieder geschlossen ist, kann die Elektronenkanone (6) aktiviert werden und mit dem Schreiben der Schichtdaten für die erste Schicht beginnen.

Nachdem die erste Schicht geschrieben wurde, beginnt der Vorgang wieder in die andere Richtung. Bei Anlagen, in denen nur ein Pulverreservoir (4) verbaut ist, kann das Pulverauftragselement (5) entweder in der Position jenseits des Baubereichs (2) verharren bis die Schicht geschrieben ist und das Unterteil (9) der Abschirmung (7) wieder angehoben ist und erst danach in die Ausgangsstellung zurückfahren, um neues Pulver zu holen, oder unmittelbar nach Durchqueren des Baubereichs (2) in einer Hin- und Herbewegung wieder in die Ausgangsstellung zurückfahren bevor die Abschirmung (7) geschlossen wird.

### Bezugszeichenliste

- 1: Vakuumkammer
- 2: Baubereich
- 3: Bauplattform
- 4: Pulverreservoir
- 5: Pulverauftragselement
- 6: Elektronenstrahlkanone
- 7: Abschirmung
- 8: Oberteil
- 9: Unterteil
- 10: Metallblech
- 11: Refraktärmetallblech
- 12: Rahmen
- 13: Rillenstruktur

## Patentansprüche

1. Additive Manufacturing System für pulverförmiges Ausgangsmaterial beinhaltend
- eine Vakuumkammer (1) beinhaltend
+ mindestens einen Baubereich (2) mit einer Bauplattform (3),
+ mindestens ein seitlich des Baubereichs (2) angeordnetes Pulverreservoir (4),
+ mindestens ein Pulverauftragselement (5), das zur Verteilung von pulverförmigem Ausgangsmaterial aus dem mindestens einen Pulverreservoir (4) auf der mindestens einen Bauplattform (3) horizontal beweglich zwischen dem mindestens einen Pulverreservoir (4) und der mindestens einen Bauplattform (3) angeordnet ist, wobei das Pulverauftragselement (5) für jeden Pulververteilungsvorgang mindestens einmal den Baubereich (2) durchquert, und
- mindestens eine dem mindestens einen Baubereich (2) zugeordnete Elektronenstrahlkanone (6),
wobei
- der mindestens eine Baubereich (2) von einer Abschirmung (7) gegen Röntgenstrahlung umgeben ist, die vier Wände umfasst, von denen zwei durch Wände der Vakuumkammer (1) gebildet werden können,
**dadurch gekennzeichnet, dass**
- die Wände der Abschirmung (7) mindestens auf den beiden Seiten in Bewegungsrichtung des mindestens einen Pulverauftragselements (5) aus einem Oberteil (8) und einem Unterteil (9) bestehen, wobei
+ das Oberteil (8) starr mit der Vakuumkammer (1) verbunden ist, aus 2-11 horizontal beabstandeten Metallblechen (10) gebildet wird und eine lichte Höhe über der Bauplattform (3) aufweist, die die horizontale Bewegung des Pulverauftragselements (5) durch den Baubereich (2) gestattet, und
+ das Unterteil (9) mit einem vertikal beweglichen Rahmen (12) verbunden ist und aus 2-11 horizontal beabstandeten Refraktärmetallblechen (11) gebildet wird, die kämmend zu den Metallblechen (10) des Oberteils (8) angeordnet sind und röntgendicht an dem beweglichen Rahmen (12) befestigt sind; und
- das Unterteil (9) relativ zum Oberteil (8) in der Vertikalen zwischen einer geschlossenen Stellung und einer geöffneten Stellung bewegbar ist, wobei die Refraktärmetallbleche (11) des Unterteils (9)
+ in der geschlossenen Stellung mit ihren Unterkanten mit einer Rillenstruktur (13) auf der Oberfläche des Baubereichs (2) unter Ausbildung einer Labyrinthstruktur in kämmendem Eingriff stehen und mit ihren Oberkanten unter Ausbildung einer Labyrinthstruktur in kämmendem Eingriff mit den Metallblechen (10) des Oberteils (8) angeordnet sind, und
+ in der geöffneten Stellung mindestens so weit zwischen den Metallblechen (10) des Oberteils (8) zu liegen kommen, dass sie die horizontale Bewegung des Pulverauftragselements (5) durch den Baubereich (2) gestatten.

2. Additive Manufacturing System nach Anspruch 1, wobei die Refraktärmetallbleche (11) des Unterteils (9) eine Dichte von mehr als 10 g/cm³, bei 20 °C, aufweisen.

3. Additive Manufacturing System nach Anspruch 1 oder 2, wobei die Refraktärmetallbleche (11) des Unterteils (9) aus Wolfram, Molybdän, Rhenium, Tantal und/oder Mischungen oder Legierungen derselben bestehen.

4. Additive Manufacturing System nach einem der vorhergehenden Ansprüche, wobei die Metallbleche (10) des Oberteils (8) aus Edelstahl, Kupfer, Refraktärmetallen und/oder Mischungen oder Legierungen derselben bestehen.

5. Additive Manufacturing System nach einem der vorhergehenden Ansprüche, wobei alle vier Wände der Abschirmung (7) aus einem Oberteil (8) und Unterteil (9) bestehen.

6. Additive Manufacturing System nach einem der vorhergehenden Ansprüche, wobei die röntgendichte Befestigung der Refraktärmetallbleche (11) des Unterteils (9) an dem beweglichen Rahmen (12) eine Abstandsbolzenbefestigung umfasst, die zweierlei Durchmesser aufweist, wobei der erste Durchmesser passend zur Bohrung in den Refraktärmetallblechen (11) dimensioniert ist und der zweite Durchmesser, den die Abstandsbolzen außerhalb der Bohrung aufweisen, größer ist und zwar so, dass die Strahlung auf dem Weg durch die Bohrung vom Abstandsbolzen genauso abgeschirmt wird, wie durch das Refraktärmetallblech (11) im nicht durchbohrten Bereich.

7. Additive Manufacturing System nach einem der vorhergehenden Ansprüche, wobei die Refraktärmetallbleche (11) des Unterteils (9) jeweils eine Dicke von 0,1 bis 20 mm aufweisen.

8. Additive Manufacturing System nach einem der vorhergehenden Ansprüche, wobei die Metallbleche (10) des Oberteils (8) jeweils eine Dicke von 1 bis 100 mm aufweisen.

9. Additive Manufacturing System nach einem der vorhergehenden Ansprüche, wobei die Refraktärmetallbleche (11) des Unterteils (9) und die Metallbleche (10) des Oberteils (8) bei kämmendem Eingriff jeweils einen Abstand von 1 bis 50 mm zueinander aufweisen.

10. Additive Manufacturing System nach einem der vorhergehenden Ansprüche, wobei in jeder Lage an Refraktärmetallblechen (11) des Oberteils (8) und/oder Unterteils (9) mindestens zwei Stöße vorgesehen sind, die einen Spalt von bis zu 50 mm aufweisen.

11. Additive Manufacturing System nach Anspruch 10, wobei die Stöße zweier aufeinanderfolgender Lagen an Refraktärmetallblechen (11) innerhalb des Oberteils (8) und/oder Unterteils (9) jeweils nicht fluchtend angeordnet sind.

12. Additive Manufacturing System nach einem der vorhergehenden Ansprüche, wobei das Pulverauftragselement (5) eine Rakel oder eine Rolle ist.

13. Verfahren zur Herstellung eines Bauteils mit einem Additive Manufacturing System beinhaltend die Schritte
a) Bereitstellen eines Additive Manufacturing Systems nach einem der vorangehenden Ansprüche,
b) Bereitstellen von pulverförmigem Ausgangsmaterial in dem mindestens einen Pulverreservoir (4) und Evakuieren der Vakuumkammer (1),
c) Bewegen des Unterteils (9) der Abschirmung (7) in die geöffnete Stellung,
d) Verteilen von pulverförmigem Ausgangsmaterial aus dem mindestens einen Pulverreservoir (4) auf der mindestens einen Bauplattform (3) durch horizontales Bewegen des Pulverauftragselements (5) zwischen dem mindestens einen Pulverreservoir (4) und der mindestens einen Bauplattform (3), unter mindestens einmaligem vollständigen Durchqueren des Baubereichs (2),
e) Bewegen des Unterteils (9) der Abschirmung (7) in die geschlossene Stellung,
f) Erzeugen einer Schicht des Bauteils durch Bestrahlen des pulverförmigen Ausgangsmaterials mit der mindestens einen Elektronenstrahlkanone (6),
g) Wiederholen der Schritte c) bis f) bis das Bauteil fertiggestellt ist.

## Claims

1. An additive manufacturing system for powdery starting material comprising
- a vacuum chamber (1) comprising
+ at least one construction region (2) with a construction platform (3),
+ at least one powder reservoir (4) being arranged laterally with respect to the construction region (2),
+ at least one powder application element (5) which is arranged horizontally movable between the at least one powder reservoir (4) and the at least one construction platform (3), for the distribution of powdery starting material from the at least one powder reservoir (4) on the at least one construction platform (3), wherein the powder application element (5) for each powder distribution process at least once crosses through the construction region (2), and
- at least one electron beam gun (6) being assigned to the at least one construction region (2),
wherein
- the at least one construction region (2) is surrounded by a shielding (7) against X-rays comprising four walls, wherein two of them may be formed by walls of the vacuum chamber (1),
**characterized in that**
- the walls of the shielding (7) at least on both sides in the moving direction of the at least one powder application element (5) consist of an upper part (8) and a lower part (9), wherein
+ the upper part (8) is rigidly connected with the vacuum chamber (1), is formed from 2-11 sheet metals (10) which are horizontally spaced apart from each other and is **characterized by** a clearance height above the construction platform (3) which allows the horizontal movement of the powder application element (5) through the construction region (2), and
+ the lower part (9) is connected with a vertically movable frame (12) and is formed from 2-11 refractory sheet metals (11) which are horizontally spaced apart from each other, which are arranged with respect to the sheet metals (10) of the upper part (8) in an intermeshing manner and are mounted at the movable frame (12) in a radiopaque manner; and
- the lower part (9) is movable relative to the upper part (8) in the vertical between a closed position and an opened position, wherein the refractory sheet metals (11) of the lower part (9)
+ in the closed position with their lower edges are engaged in an intermeshing manner with a groove structure (13) on the surface of the construction region (2) under formation of a labyrinth structure and with their upper edges are arranged in an intermeshing engagement with the sheet metals (10) of the upper part (8) under formation of a labyrinth structure, and
+ in the opened position come to lie between the sheet metals (10) of the upper part (8) at least thus far that they allow the horizontal movement of the powder application element (5) through the construction region (2).

2. The additive manufacturing system according to claim 1, wherein the refractory sheet metals (11) of the lower part (9), at 20 °C, have a density of higher than 10 g/cm³.

3. The additive manufacturing system according to claim 1 or 2, wherein the refractory sheet metals (11) of the lower part (9) consist of tungsten, molybdenum, rhenium, tantalum and/or mixtures or alloys thereof.

4. The additive manufacturing system according to one of the preceding claims, wherein the sheet metals (10) of the upper part (8) consist of stainless steel, copper, refractory metals and/or mixtures or alloys thereof.

5. The additive manufacturing system according to one of the preceding claims, wherein all of the four walls of the shielding (7) consist of an upper part (8) and a lower part (9).

6. The additive manufacturing system according to one of the preceding claims, wherein the radiopaque mounting of the refractory sheet metals (11) of the lower part (9) at the movable frame (12) comprises a spacer bolt mounting having two diameters, wherein the first diameter is dimensioned such that it fits into the bore in the refractory sheet metals (11) and the second diameter by which the spacer bolts outside of the zone of the bore are characterized is larger, and it is such that the radiation on the way through the bore is shielded by the spacer bolt justlike by the refractory sheet metal (11) in the area without any bore.

7. The additive manufacturing system according to one of the preceding claims, wherein the refractory sheet metals (11) of the lower part (9) each have a thickness of 0.1 to 20 mm.

8. The additive manufacturing system according to one of the preceding claims, wherein the sheet metals (10) of the upper part (8) each have a thickness of 1 to 100 mm.

9. The additive manufacturing system according to one of the preceding claims, wherein the refractory sheet metals (11) of the lower part (9) and the sheet metals (10) of the upper part (8) in the case of intermeshing engagement each have a distance of 1 to 50 mm to each other.

10. The additive manufacturing system according to one of the preceding claims, wherein in each layer of refractory sheet metals (11) of the upper part (8) and/or lower part (9) at least two joint areas with a gap of up to 50 mm are provided.

11. The additive manufacturing system according to claim 10, wherein the joint areas of two successive layers of refractory sheet metals (11) within the upper part (8) and/or lower part (9) each are arranged in a misaligned manner.

12. The additive manufacturing system according to one of the preceding claims, wherein the powder application element (5) is a doctor blade or a roll.

13. A method for manufacturing a component with an additive manufacturing system comprising the steps
a) providing of an additive manufacturing system according to one of the preceding claims,
b) providing of powdery starting material in the at least one powder reservoir (4) and evacuating of the vacuum chamber (1),
c) moving of the lower part (9) of the shielding (7) into the opened position,
d) distributing of powdery starting material from the at least one powder reservoir (4) on the at least one construction platform (3) by horizontal movement of the powder application element (5) between the at least one powder reservoir (4) and the at least one construction platform (3), under complete crossing through the construction region (2) at least once,
e) moving of the lower part (9) of the shielding (7) into the closed position,
f) creating of a layer of the component by irradiating the powdery starting material with the at least one electron beam gun (6),
g) repeating of the steps c) to f) until the component is finished.

## Revendications

1. Système de fabrication additive pour matériau de départ en poudre, contenant
- une chambre à vide (1) contenant
- au moins une zone de construction (2) avec une plateforme de construction (3),
- au moins un réservoir de poudre (4) disposé côté zone de construction (2),
- au moins un élément d'application de poudre (5) qui est disposé de manière mobile horizontalement entre l'au moins un réservoir de poudre (4) et l'au moins une plateforme de construction (3) pour la distribution de matériau de départ en poudre à partir de l'au moins un réservoir de poudre (4) sur l'au moins une plateforme de construction (3), dans lequel l'élément d'application de poudre (5) traverse au moins une fois la zone de construction (2) pour chaque processus de distribution de poudre, et
- au moins un canon à électrons (6) associé à l'au moins une zone de construction (2),
dans lequel
- l'au moins une zone de construction (2) est entourée d'un blindage (7) contre les rayons X, qui comprend quatre parois, dont deux peuvent être formées par des parois de la chambre à vide (1),
**caractérisé en ce que**
- les parois du blindage (7) sont constituées, au moins sur les deux côtés dans la direction de déplacement de l'au moins un élément d'application de poudre (5), d'une partie supérieure (8) et d'une partie inférieure (9), dans lequel
- la partie supérieure (8) est connectée de manière rigide à la chambre à vide (1), est formée de 2-11 tôles métalliques (10) espacées horizontalement et présente une hauteur libre au-dessus de la plateforme de construction (3) qui permet le déplacement horizontal de l'élément d'application de poudre (5) à travers la zone de construction (2), et
- la partie inférieure (9) est connectée à un cadre (12) mobile verticalement et est formée de 2-11 tôles métalliques réfractaires (11) espacées horizontalement, qui sont disposées en engrènement par rapport aux tôles métalliques (10) de la partie supérieure (8) et sont fixées de manière étanche aux rayons X au cadre mobile (12) ; et
- la partie inférieure (9) peut être déplacée verticalement par rapport à la partie supérieure (8) entre une position fermée et une position ouverte, dans lequel les tôles métalliques réfractaires (11) de la partie inférieure (9),
- dans la position fermée, sont en prise d'engrènement par leurs bords inférieurs avec une structure à rainures (13) sur la surface de la zone de construction (2) en formant une structure en labyrinthe et sont disposées en prise d'engrènement par leurs bords supérieurs avec les tôles métalliques (10) de la partie supérieure (8) en formant une structure en labyrinthe, et
- dans la position ouverte, viennent se placer entre les tôles métalliques (10) de la partie supérieure (8) au moins suffisamment pour permettre le déplacement horizontal de l'élément d'application de poudre (5) à travers la zone de construction (2).

2. Système de fabrication additive selon la revendication 1, dans lequel les tôles métalliques réfractaires (11) de la partie inférieure (9) présentent une densité supérieure à 10 g/cm³ à 20 °C.

3. Système de fabrication additive selon la revendication 1 ou 2, dans lequel les tôles métalliques réfractaires (11) de la partie inférieure (9) sont constituées de tungstène, de molybdène, de rhénium, de tantale et/ou de mélanges ou d'alliages de ceux-ci.

4. Système de fabrication additive selon l'une quelconque des revendications précédentes, dans lequel les tôles métalliques (10) de la partie supérieure (8) sont constituées d'acier inoxydable, de cuivre, de métaux réfractaires et/ou de mélanges ou d'alliages de ceux-ci.

5. Système de fabrication additive selon l'une quelconque des revendications précédentes, dans lequel les quatre parois du blindage (7) sont constituées d'une partie supérieure (8) et d'une partie inférieure (9).

6. Système de fabrication additive selon l'une quelconque des revendications précédentes, dans lequel la fixation radio-opaque des tôles métalliques réfractaires (11) de la partie inférieure (9) au cadre mobile (12) comprend une fixation à entretoises qui présente deux diamètres différents, dans lequel le premier diamètre est dimensionné pour correspondre au perçage dans les tôles métalliques réfractaires (11) et le second diamètre, que les entretoises présentent à l'extérieur du perçage, est plus grand, et ce, de sorte que le rayonnement est protégé par l'entretoise sur le trajet à travers le perçage de la même manière que par la tôle métallique réfractaire (11) dans la zone non percée.

7. Système de fabrication additive selon l'une quelconque des revendications précédentes, dans lequel les tôles métalliques réfractaires (11) de la partie inférieure (9) présentent chacune une épaisseur de 0,1 à 20 mm.

8. Système de fabrication additive selon l'une quelconque des revendications précédentes, dans lequel les tôles métalliques (10) de la partie supérieure (8) présentent respectivement une épaisseur de 1 à 100 mm.

9. Système de fabrication additive selon l'une quelconque des revendications précédentes, dans lequel les tôles métalliques réfractaires (11) de la partie inférieure (9) et les tôles métalliques (10) de la partie supérieure (8) présentent respectivement un écart de 1 à 50 mm entre elles en cas de prise d'engrènement.

10. Système de fabrication additive selon l'une quelconque des revendications précédentes, dans lequel, dans chaque couche, au moins deux joints sont prévus sur des tôles métalliques réfractaires (11) de la partie supérieure (8) et/ou de la partie inférieure (9), qui présentent une fente allant jusqu'à 50 mm.

11. Système de fabrication additive selon la revendication 10, dans lequel les joints de deux couches successives de tôles métalliques réfractaires (11) sont respectivement non alignés à l'intérieur de la partie supérieure (8) et/ou de la partie inférieure (9).

12. Système de fabrication additive selon l'une quelconque des revendications précédentes, dans lequel l'élément d'application de poudre (5) est un racloir ou un rouleau.

13. Procédé de fabrication d'un composant avec un système de fabrication additive, contenant les étapes consistant à
a) fournir un système de fabrication additive selon l'une quelconque des revendications précédentes,
b) fournir du matériau de départ en poudre dans l'au moins un réservoir de poudre (4) et évacuer la chambre à vide (1),
c) déplacer la partie inférieure (9) du blindage (7) dans la position ouverte,
d) distribuer le matériau de départ en poudre provenant de l'au moins un réservoir de poudre (4) sur l'au moins une plateforme de construction (3) en déplaçant horizontalement l'élément d'application de poudre (5) entre l'au moins un réservoir de poudre (4) et l'au moins une plateforme de construction (3) en traversant au moins une fois complètement la zone de construction (2),
e) déplacer la partie inférieure (9) du blindage (7) dans la position fermée,
f) produire une couche du composant en irradiant le matériau de départ en poudre avec l'au moins un canon à électrons (6),
g) répéter les étapes c) à f) jusqu'à ce que le composant soit terminé.
